# EUROPEAN PATENT SPECIFICATION

(11) **EP 2 685 805 B1**
(45) Date of publication and mention of the grant of the patent: **23.08.2017**
(21) Application number: 12711979.0
(22) Date of filing: 15.03.2012
(51) Int. Cl.: A01F 29/00, A01F 29/10, B02C 13/286

(54) **DEVICE FOR REDUCING VEGETABLE PRODUCTS, AS WELL AS METHODS FOR OPERATING SUCH A DEVICE**
VORRICHTUNG ZUR ZERKLEINERUNG VON GEMÜSEPRODUKTEN, SOWIE METHODEN FÜR DEN BETRIEB EINER SOLCHEN VORRICHTUNG
DISPOSITIF DE RÉDUCTION DE PRODUITS VÉGÉTAUX, AINSI QUE LES MÉTHODES POUR FAIRE FONCTIONNER UN TEL DISPOSITIF

(30) Priority: 15.03.2011 NL 2006398
(43) Date of publication of application: 22.01.2014
(73) Proprietor: Belogin B.V., 3461 HW Linschoten (NL)
(72) Inventor: BELO, Arie, 3461 EC Linschoten (NL); VROEGE, Izak, Pieter, 3904 HC Veenendaal (NL); DRIEGEN, Jan, 8255 GC Swifterbant (NL)
(74) Representative: Algemeen Octrooi- en Merkenbureau B.V.
(86) International application number: PCT/NL2012/050159
(87) International publication number: WO 2012/125035

(56) References cited:
- WO-A2-2007/085221
- DE-A1- 2 749 256
- GB-A- 1 534 965
- US-A- 2 644 644
- US-A- 2 732 138
- US-A- 4 166 583

## Description

The present invention relates to a device for reducing vegetable products according to the preamble of claim 1. Such a device is described in DE 2749256 A1. In this device straw is delivered via a chute to a rotor from which the straw passes to a hammer mill. Downstream of the hammer mill the comminuted straw is drawn by a fan through a sieve screen which extends around the hammer mill rotor.

To prepare vegetable products for subsequent processing steps, such as a fermentation process, for example, it is generally desirable to damage and/or reduce the material thereof, such that cells of the vegetable products are exposed as much as possible, so that ferments, enzymes and bacteria will have relatively easy access thereto. Within the framework of the present invention, the term "vegetable products" is to be understood to include derivatives thereof. Think in this connection of products such as manure, straw, sprouts, onions, cereals, sugar beets, corn, potatoes and/or vegetables, fruit and/or garden and kitchen and garden waste in general.

When cell walls are damaged, the ferments, enzymes and bacteria will have easy access to the interior of the cell. Said interior of the cell can be (largely) fermented. The product of the fermentation process is biogas, which can be used for energy generation. In order to maximize the net benefit that is obtained by generating energy in this way, it is important that relatively little energy is required for the reduction of the vegetable products and that the result of the reducing process is such that the fermentation process is maximally supported.

The object of the present invention is to provide a device as described in the introduction wherein the aforesaid contradictory requirements are met as optimally as possible, and wherein the device is also suitable for damaging and/or reducing cell walls of vegetable products in a continuous process.

In order to accomplish that object, the housing part of the device according to the present invention is provided with a curved screen on at least the downstream outer side of the path of the reducing elements associated with the rotary member that is disposed closest to the feeding means, and the distance between the feeding means and the reducing means equals 2/3 of the diameter of the rotary member and/or wherein said distance ranges between 10 cm and 50 cm. It has been found that, using such a device, cell walls of vegetable products can be damaged in a very efficient manner, so that subsequently ferments, enzymes and bacteria will have relatively easy access thereto for forming biogas. The space between the feeding means and the rotating reducing elements of the front rotary member inside the housing part can function as a buffer space of vegetable material to be reduced which also has a certain degree of elasticity if the speed at which the vegetable products to be reduced are supplied and the speed at which reduced vegetable material is discharged are not exactly identical. The optimum spacing will depend partially on the nature and the size of the natural products to be reduced. The invention can also be used for other purposes, however, for example for reducing products for (mash) feed.

The damaging of the cell walls and the reducing of the vegetable material takes place in particular as a result of the action of the reducing elements associated with the rotary member to which the vegetable products are fed first by the feeding means and which rub/scrape/beat off material layer by layer, as it were, from the vegetable products being supplied by the feeding means. The feeding means preferably compact the vegetable material, which is thus wedged between the feeding means and the reducing elements, as it were, and which is subsequently rubbed/scraped/beat off by the reducing elements. Use of the feeding means in combination with the housing part provided with the inlet and the outlet moreover makes it possible to have the reduction of the vegetable products take place in a continuous process. Thus, a high efficiency device is obtained.

The fact that the reducing elements comprise at least two rotary members disposed one behind the other inside the housing part is conducive to the reduction process. The rotary members are disposed one behind the other, seen in the direction of flow of the material to be reduced, such that the material to be reduced will first reach the first rotary member and then the second rotary member. The housing part is designed so that the material to be reduced will be essentially subjected to the reducing action of at least two of the rotary members. The reducing effect on the vegetable material is in particular obtained because first the reducing elements strike against the vegetable material and subsequently the vegetable material strikes against the reducing elements. The effect of the reducing interaction will be greatest if a difference in speed exists between the reducing elements of the adjacent rotary members, in particular if the reducing elements pass one another in opposite directions.

The curved guide screen advantageously causes the material to be reduced to be moved by the rotation of the front one of the two adjacent rotary members along the inner side of the screen to the area where the reducing elements of the adjacent rotary members pass one another at a short distance from each other. The material rubbed/scraped/beat off by the rotary member located furthest upstream is thus fed to the rotary member disposed downstream thereof in a guided manner. In used, said adjacent rotary member preferably rotates in the same direction as the aforesaid rotary member, resulting in a relatively high speed between the reducing elements of the two rotary members. The material being supplied via the curved guide screen thus strikes against the adjacent rotary member at a high speed, resulting in further damage to the cell wall and reduction of the vegetable material. An additional advantage of the guide screen is that the vegetable material can strike back against the first rotary member, so that the vegetable material can be further subjected to the striking action of the reducing elements.

It is noted that the device according to the present invention is essentially different from a hammer mill. In the case of a hammer mill the object is generally to reduce the material being supplied to a maximum size. Once said maximum size is reached, the reduced material can exit the hammer mill via a large number of openings formed in the housing of the hammer mill. In the device according to the present invention, the particles to be reduced pass the at least two rotary elements at all times, irrespective of the size of the particles. The device according to the present invention can rather be considered as an impact mill, in which the material to be reduced strikes against the reducing elements. The object of the device is precisely to crush relatively soft material, such that the cell walls will break up and the interior will be exposed. Because of the aforesaid properties of the device, relatively hard material, such as solid branches and stones, can on the other hand pass the device in relatively unharmed condition. This further enhances the efficiency, since the relatively hard materials are often materials having a low fermentation yield. This effect is further enhanced in that in one embodiment, which will be explained in more detail hereinafter, the reducing elements are pivotally connected to the rotary members.

In order to further increase the efficiency of the device, it is preferable if the curved screen extends to a point on an axis connecting line that interconnects the central axes of the at least two rotary members. Preferably, one end of the curved screen is located near, and preferably on, the axis connecting line. The vegetable material will thus impact at the location of the axis connecting line, where the relative difference in speed between the reducing elements is greatest in use, if the rotary members rotate in the same direction.

The curved guide screen preferably has an arcuate angle that ranges between 10 and 90 degrees.

Furthermore preferably, the screen is entirely located on the downstream side of the central axis of the associated rotary member.

It is preferable if the ends of the reducing elements pass the screen at a distance therefrom, which distance is at most 25 mm, preferably at most 10 mm. Said distance is preferably at most 5 mm.

A further efficiency improvement is obtained if, in use, the ends of the reducing elements associated with a rotary member pass the ends of the reducing elements associated with an adjacent rotary member on facing sides with a spacing at most 25 mm, preferably at most 10 mm, more preferably at most 5 mm therebetween. In the case of a slightly larger spacing, pieces of a relatively hard material (such as wood, or stones) can move between the reducing elements without the rotation elements jamming or threatening to jam. The reducing elements and the rotary members are thus not loaded unnecessarily, and less energy is required for driving the rotary members.

The efficiency of the reducing process is in particular enhanced if the housing has an upper surface and/or a bottom surface along the inner side of which ends of the reducing elements associated with at least one rotary member pass with a spacing of at most 25 mm, preferably at most 10 mm, more preferably at most 5 mm therebetween in use.

The outlet is preferably located downstream of the at least two rotary members, such that recirculation of material to be reduced is possible. Recirculation is made possible in that particles reduced by the first rotary member will strike against the second rotary member, as a result of which (some of) the particles will move upstream. As a result of the upstream movement, the particles will again come into contact with the first rotary member. The circulation of particles can take place a number of times. In order to further advance said circulation, it is preferable if the housing (in particular the upper surface and/or the bottom surface thereof) is free from one or more outlets - except for the central outlet that is provided downstream.

To enable easy replacement in case of wear or, generally, a dysfunction, it is preferable if the reducing elements are exchangeably connected to an associated arm.

According to an important preferred embodiment, the reducing elements are pivotally connected to an associated arm about pivot pins that extend parallel to the axes of rotation. Thus, space can be provided for hard parts, such as stones, to pass between a reducing element and, for example, a wall portion of the housing part. To that end the reducing element can pivot in the direction of the central axis of the associated rotary member, so that space is provided for such hard parts to pass between the reducing elements and the wall portion and the device will not sustain any damage.

In order to make it possible to balance the rotary member, it is advantageous if arms associated with a shaft member extend in different radial directions.

In order to increase the capacity of the device according to the invention without having to use relatively wide reducing elements, it is furthermore preferable if arms associated with a shaft member connect to the shaft member at different axial positions.

To realise an optimum process control, it is preferable if the driving means for each rotary member comprise an individually controllable driving motor. Thus, the rotary members can be simply driven at various rotational speeds and different power levels, which has been found to be advantageous.

To realise a continuous supply of vegetable products to be reduced it is advantageous if the feeding means comprise a screw conveyor which is rotatable about a further axis of rotation, having a central axis which coincides with said further axis of rotation, defining the feeding direction, and an end that faces the reducing means, which end is located within a tubular further housing part that closely abuts the outer side of the screw conveyor, which housing part connects to the inlet.

A semi-continuous supply of vegetable products to be reduced is also conceivable. In one embodiment, a piston system comprising a plunger unit is used for the batchwise feeding of vegetable products to be reduced. Other systems for continuous or batchwise feeding are also conceivable, of course.

It is furthermore preferable in that regard if, in use, the distance between the end of the screw conveyor and ends of the reducing elements associated with a rotary member present on the side of the inlet is at most 60 cm, preferably ranging between 10 cm and 50 cm. The relevant rotary member is the rotary member to which the vegetable products are fed first by the feeding means. The space between the end of the screw conveyor and the rotating reducing elements of the front rotary member within the tubular further housing part can function as a buffer space which, in addition, has a certain elasticity if the speed at which vegetable products to be reduced are fed and the speed at which reduced vegetable material is discharged are not exactly identical. The optimum spacing will depend partially on the nature and the size of the natural products to be reduced.

The supply by the feeding means of vegetable products to be reduced takes place most advantageously if the extension of the central axis of the screw conveyor intersects the central axis of at least one rotary member and, if a number of rotary members are provided, preferably the central axes of all rotary members or crosses said axes at a distance of at most 5 cm.

An optimum through-flow of vegetable products being subjected to the reducing action of the at least one rotary member takes place if the inlet and the outlet are located on two opposite sides of the housing part.

The present invention further relates to a method for operating a device according to the invention, wherein at least two rotary members are used which are driven in the same direction. Since the rotary members are driven in the same direction, the reducing elements associated with the respective rotary members moves in opposite directions on their facing sides, so that an optimum reducing action is obtained.

It has been found that it is preferable in that regard to drive an upstream rotary element at a higher speed than an adjacent downstream rotary member.

The level of efficiency in reducing vegetables product is positively affected if at least one rotary member is driven at a speed of between 1000 and 3000 revolutions per minute.

An optimum process control that enables a better control of the force with which rotary elements act on material to be reduced or already reduced, and thus the reducing process, can be obtained if at least two rotary members are driven at different power levels.

If the conveying means of the device according to the invention comprise a screw conveyor as described above for a preferred embodiment, it is preferable if the screw conveyor is driven at a speed that ranges between 0.5 and 10 revolutions per minute.

The invention will now be explained in more detail on the basis of a description of a non-limitative possible embodiment of the device according to the invention with reference to the following figures.
Figure 1 is a perspective top plan view of a reducing device according to the invention;
Figure 2 is a vertical sectional view of the reducing device of figure 1;
Figure 3 is a perspective view of a part of the reducing device of figure 1;
Figure 4 is a perpendicular view parallel to the feeding direction of the part shown in figure 3;
Figure 5 is a vertical sectional view of a reducing device according to an embodiment of the invention;
Figure 6 is a vertical sectional view of a reducing device according to an embodiment of the invention;
Figure 7 is a vertical sectional view of a reducing device according to an embodiment of the invention.

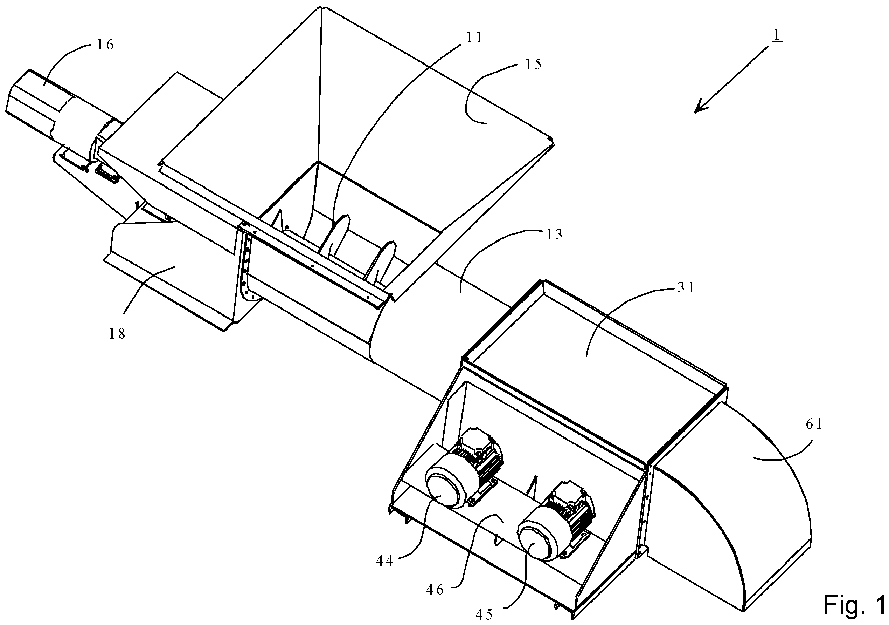

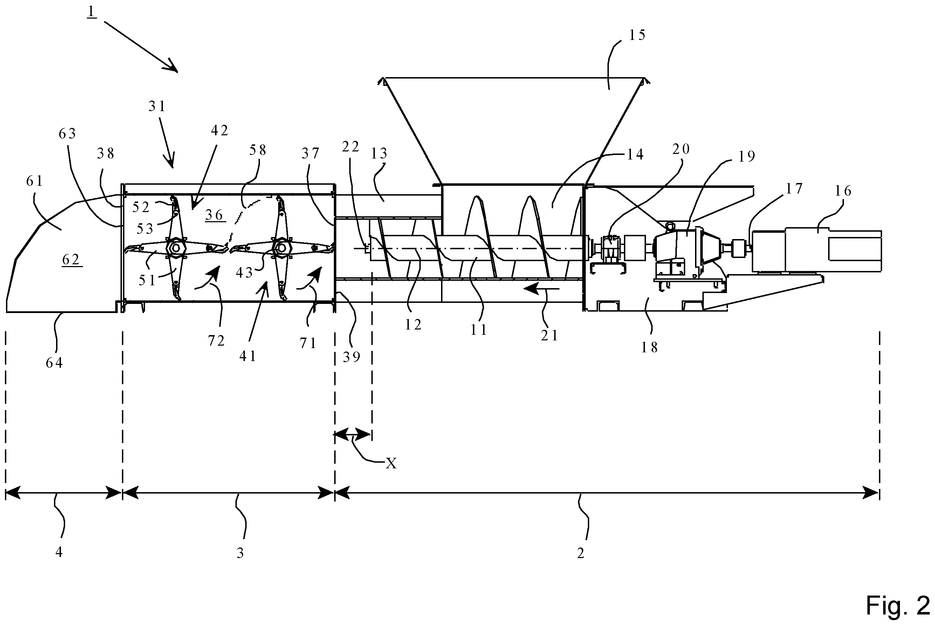

Figures 1 and 2 show an isometric and a vertical cross-sectional view, respectively, of a reducing device 1 according to the invention. The reducing device 1 may be considered to be made up of a feeding part 2, a reducing part 3 and discharging part 4, which parts connect to each other.

The feeding part 2 comprises a screw conveyor 11 having a central axis 12. The screw conveyor 11 is mounted in a tubular housing part 13 having a circular cross-section, whose internal diameter is to a limited extent, for example at most 5 mm or, for example, at most 25 mm, larger than the external diameter of the screw conveyor 11. An opening 14 is provided in the upper side of the housing part 13, to which opening a funnel 15 connects. The screw conveyor 11 is rotatable about an axis of rotation that coincides with the central axis 12.

The feeding part 2 comprises a driving motor 16 having an outgoing shaft 17 for driving the rotation of the screw conveyor 11. The driving motor 16 is mounted on a frame 18, to which also the housing part 13 is rigidly connected. The outgoing shaft 17 is connected to the screw conveyor 11 via a transmission 19 and a bearing 20. Like the driving motor 16, the transmission 19 and the bearing 20 are supported on the frame 18. The driving motor 16 and the transmission 19 may also be combined in a single driving unit.

The screw conveyor 11 is rotatably driven by suitable energization of the driving motor 16, as a result of which vegetable products that have been deposited into the screw conveyor 11 via the funnel 15 will be conveyed in the feeding direction 21. The screw conveyor 11 has a free end 22 which, seen in the feeding direction 21, is spaced from the end of the housing part 13 by a distance X. A typical dimension for the distance X is 10 - 50 cm, for example X = 20 cm, dependent in part on the nature and the dimensions of the natural products to be reduced. The distance X preferably equals 2/3 the diameter of the rotary member.

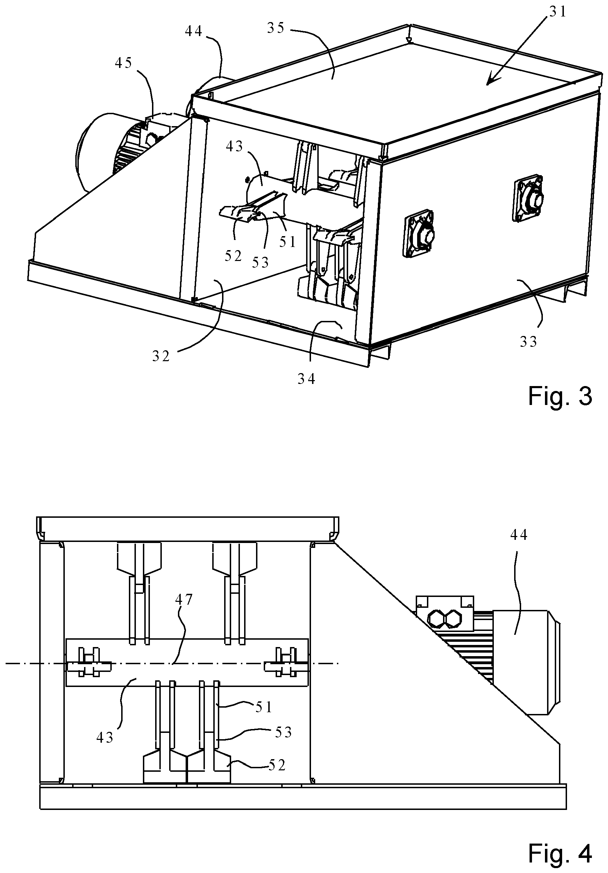

The reducing part 3 (see also figures 3 and 4) comprises an at least substantially rectangular, box-shaped housing part 31 having two opposing walls 32, 33, a bottom wall 34 and, opposite thereto, an upper wall 35. The walls 32-35 join one another in such a manner that the housing part 31 has a rectangular, nearly square passage 36, seen in vertical sectional view. The passage 36 extends from an inlet 37 to an outlet 38. The inlet 37 has a round shape, in connection with which the housing part 13 is provided, on the side of the inlet 37, with a plate 39 that extends transversely to the conveying direction 21, in which plate a round hole is present. The diameter of the round inlet 37 conforms to that of the tubular housing part 13. The outlet 38 has a rectangular shape; it is located on the side of the housing part 31 opposite the inlet 37.

The reducing part 3 is furthermore provided with two rotary members 41, 42, each having a shaft member 43 that extends in horizontal direction, perpendicularly to the feeding direction 21. The extension of the central axis 12 of the screw conveyor 11 intersects the central axes of the shaft members 43. The shaft members 43 are rotatably journalled on both sides in the two upright walls 32, 33 of the housing part 31; on the outer side of the upright wall 32 they are connected to an outgoing shaft of one of the driving motors 44, 45. The driving motors 44, 45 are rigidly mounted to a frame 46, which is rigidly connected to the housing part 31. The driving motors 44, 45 can be individually controlled, so that the rotary members 41, 42 can be driven independently at different speeds and power levels.

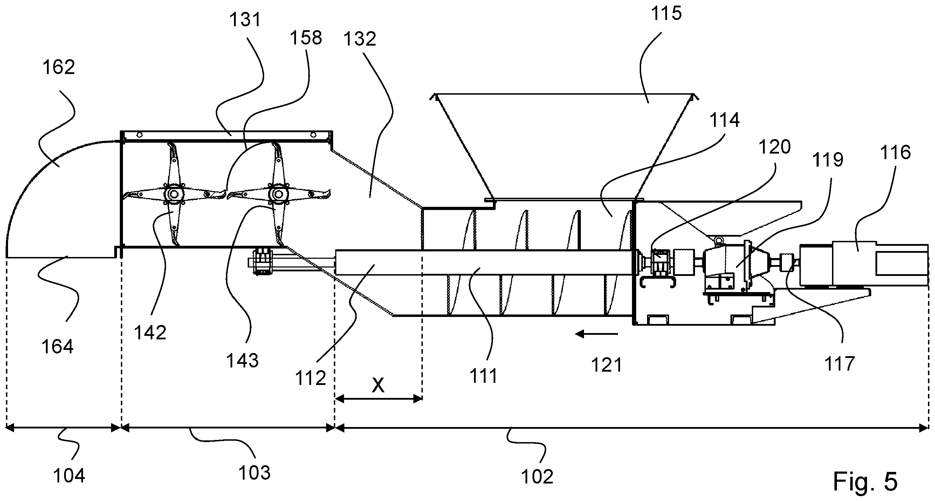

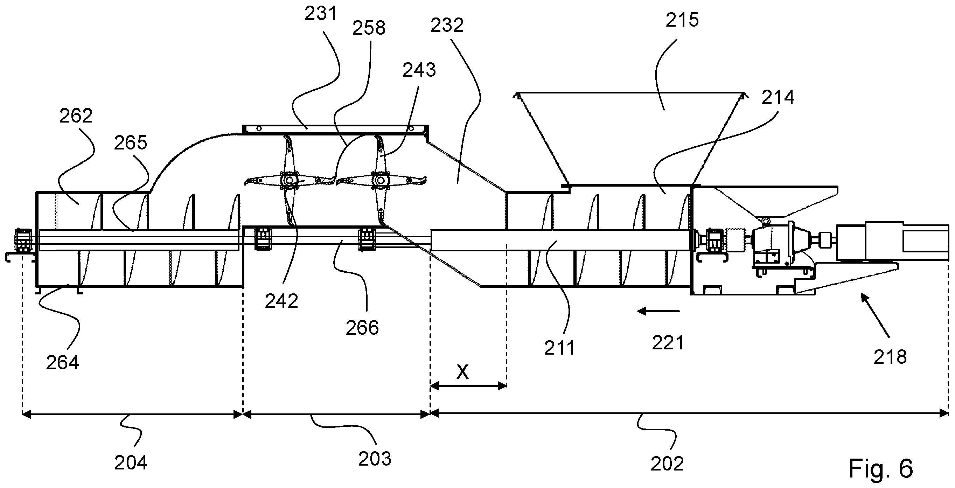

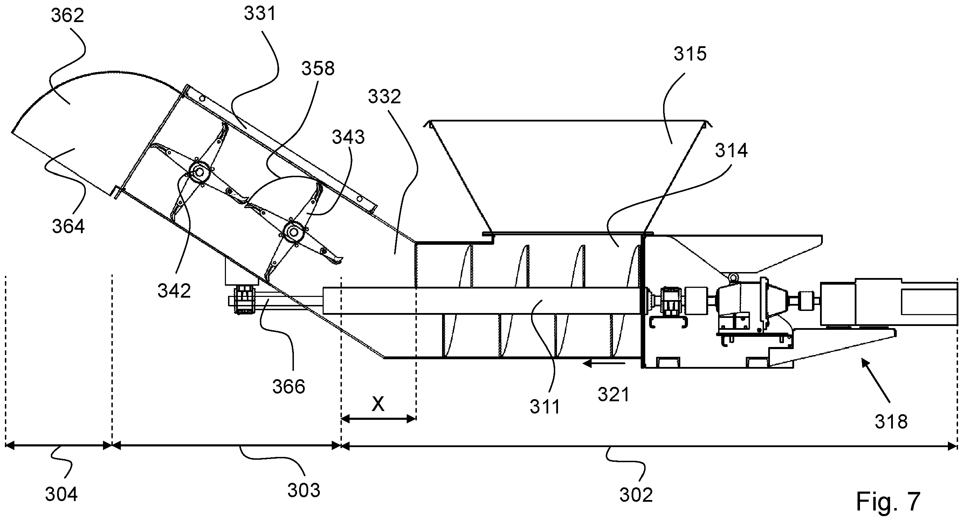

The rotary members 41, 42 comprise radially oriented arms 51, which extend partially in directions perpendicular to each other and partially in line with each other, so that the rotary members 41, 42 are balanced. The arms 51 are connected to the associated shaft member 43 at different axial positions. A reducing element 52 is provided on the end of each arm 51. Each reducing element 52 is more or less scoop-shaped. Said reducing elements 52 are exchangeable to enable replacement in case of wear, and pivotally connected to an associated arm 51 about pivot pins 53 extending parallel to the central axis 47. The connecting line between the central axis 47 and the central axis of an adjacent rotary member is called the axis connecting line. As figure 2 shows, said axis connecting line is in line with the central axis 12 of the screw conveyor 11 and extends parallel thereto. In other embodiments (as shown in figure 5 and figure 6) the axis connecting line extends parallel to the central axis of the screw conveyor, to be true, but it is not a line therewith but spaced therefrom by some distance. It is also conceivable for the axis connecting line to extend at an angle relative to the central axis of the screw conveyor, as is shown in figure 7, for example.

Referring again to figures 1-4, the discharge part 4 is shown to comprise a housing part 61 having a downwardly sloping passage 62 that extends between an inlet 63 which connects to the outlet 38 of the housing part 31, and an outlet 64 that is oriented downwards. Said discharge part 4 may also connect to a discharge conveyor, of course, such as a screw conveyor or a belt conveyor (see figure 6).

In use, natural products to be reduced, such as manure, straw, sprouts, sugar beet, cereals, corn, potatoes and/or vegetables, fruit, garden and kitchen waste in general, are conveyed, via the funnel 15, to the screw conveyor 11 that conveys the vegetable material in the feeding direction 21, or, in other words, in the direction of the reducing part 3, during which transport the material to be reduced is also compacted. A typical speed of the screw conveyor 11 ranges between 0.5 and 10 revolutions per minute, for example 2 revolutions per minute. Partially because of the compacting operation by the screw conveyor 11, a disc-shaped lump of material will be formed beyond the free end 22 of the screw conveyor 11 within the length X, which lump of material will exhibit a certain elasticity in the feeding direction 21 and which will be slowly moved through the housing part 13 in the direction of the first rotary member 41.

The first rotary member 41 is driven at a typical speed of 1000 - 3000 revolutions per minute, for example 2000 revolutions per minute, by the driving motor 44. The reducing elements 52 will orient themselves in radial direction as much as possible on account of the centrifugal forces that occur. Said orientation is also shown in the various figures. Typically, a spacing ranging between 0 mm and 25 mm, for example 5 mm, is present between the paths of the free ends of the various reducing elements 52 on the one hand and the respective inner sides of the upper wall 35 and the bottom wall 34 on the other hand. The same applies as regards the spacing between the upper wall 35 and the bottom wall 34 on the one hand and the reducing elements 52 associated with the second rotary member 42 on the other hand. The second rotary member 42 is driven at a typical speed of 1000 - 3000 revolutions per minute, for example 1500 revolutions per minute, by the driving motor 45. The circular paths of the reducing elements 52 associated with the first rotary member 41 and the reducing elements 52 of the second rotary member 42 are spaced apart by a typical distance of between 2 mm and 25 mm, for example 5 mm, at the facing sides thereof. Since a minimum value is used for said spacing, hard objects can pass more easily between the reducing elements.

While being moved ahead within the housing part 13, material is continuously pushed within reach of the rotating reducing elements 52, as a result of which said material is scraped and/or beaten loose, as it were. As a result, the cells of the material will open in a very efficient manner. The rubbing/scraping action by the reducing elements 52 in particular plays a part at the location where a relatively narrow passage is present at the outer side of the path of the reducing elements 52. Thus, rubbing/scraping open of the cell structure of material within the housing part 31 takes place at different longitudinal positions within the passage 36 of the housing part.

The rotary members 41, 42 are driven in the same direction 71, 72, so that the reducing elements 52 move in opposite directions on facing sides of the rotary members 41, 42, which further helps to rub open the cell structure, since the reducing elements 52 of the respective rotary members pass one another, moving in opposite directions, with a relatively small spacing therebetween at the location of the transition between the working areas of the first rotary member and the second rotary member. The direction 71 has been selected so that the vegetable material that reaches the first rotary member 41 is moved upwards against the force of gravity, thus enhancing the reducing effect achieved by the first rotary member.

In order to support the reducing interaction between the rotary members at the location of the transition area between the two rotary members 41 and 42, use is made of a closed screen 58, which extends at an arcuate angle of about 70 degrees, for example, from the upper wall 35 along the path of the reducing elements 52 associated with the first rotary member, spaced therefrom by a short distance, for example a distance of 3 mm, as a result of which the material is forcedly subjected to the reducing interaction between the first rotary member 41 and the second rotary member 42, whilst in addition a reducing interaction takes place between the first rotary member 41 and the screen 58.

Once the material has completely passed through the passage 36 and has thus been subjected to the action of the two rotary members 41, 42, the reduced material is discharged in downward direction via the discharging part 4, for example into a receiving bin. It has been found that said reduced material is excellently suited for use as a starting material for subsequent processes, such as in particular a fermentation process.

Figures 5, 6 and 7 are vertical cross-sectional views of alternative embodiments of a reducing device according to the invention. In these embodiments, too, the reducing device may be considered to be made up of a feeding part 102, 202, 302, a reducing part 103, 203, 303 and a discharge part 104, 204, 304, which parts connect to each other. It is noted that the alternative embodiments are largely similar to the embodiment described in the foregoing, and that in particular the differences between the embodiments will be discussed. Parts of the reducing devices according to figures 5, 6 and 7 which correspond to parts of the reducing device 1 according to figures 1 to 4 are indicated with similar reference numbers however increased respectively with 100, 200 and 300.

With reference to the embodiment shown in figure 5, the screw conveyor 111 is disposed in a horizontal plane with its central axis. The screw conveyor 111 is rotatable about an axis of rotation that coincides with the central axis, as already explained before. The screw conveyor 111 is rotatably driven by suitable energization of the driving motor 116, so that the vegetable products being deposited into the screw conveyor via the funnel 115 will be conveyed in the feeding direction 121.

The helical part of the screw conveyor 111 has an end which, seen in the feeding direction 121, is spaced from the end of the first rotary member 143 by a distance X. Also in this case a typical dimension applies as regards the distance X, which ranges between 10 and 50 cm, for example X = 20 cm, partially dependent on the nature and the dimensions of the natural products to be reduced.

The reducing part 103 comprises an at least substantially rectangular, box- shaped housing part 131, as already described before. The reducing part 3 is provided with two rotary members 143, 142. In this embodiment, the extension of the central axis 112 of the screw conveyor 111 does not intersect the central axes of the shaft members of the rotary members 143, 142. Instead, the central axes of the shaft members of the rotary members 143, 142 are disposed higher relative to the central axis 112 of the screw conveyor. This means that the vegetable material to be reduced must be driven upward by the screw conveyor before the material reaches the first rotary member 143. Because of the slope of the part 132 of the housing part 131, the force of gravity assists in compacting the material to be reduced somewhat. This may lead to a relative increase of the number of impacts on the compacted material (at the location of the first rotary member 143). The efficiency of the device is thus increased.

Figure 6 shows a variant on the embodiment of the reducing device as described with reference to figure 5. Also in this case the screw conveyor 211, which supplies the material in the feeding direction 221, pushes the material upwards against the force of gravity in the direction of the first rotary member 243 of the two rotary members 243, 242. At the end of the reducing part 203, the discharge part 204 is provided. In this embodiment the discharge part 204 is provided with a further screw conveyor 265, which actively discharges the reduced material in the direction of the outlet 264. In this embodiment, the screw conveyor 265 is connected to the aforementioned screw conveyor 211. As a result, the two screw conveyors rotate at the same speed. It is also conceivable of course, that two individual screw conveyors are provided, which each rotate at their own speed.

Figure 7, to conclude, shows an alternative embodiment, analogous to the embodiment shown in figure 5, in which, however, the reducing part 303 and the discharge part 304 are disposed at an angle relative to the horizontal, such that the material to be reduced and the reduced material are transported upwards against the force of gravity. Such an embodiment makes it possible to place the feeding part 302 substantially below the ground surface. The funnel 315 and the outlet 364, on the other hand, may be placed above the ground in that case, such that the filling of the device and the further treatment of the reduced material will be simpler.

It will be apparent to those skilled in the art that the invention has been described in the foregoing with reference to a few possible embodiments, which embodiments are preferred. The invention is not limited to these embodiments, however. Many equivalent modifications are conceivable within the scope of the appended claims.

## Claims

1. A device (1) for reducing vegetable products, comprising reducing means (3) and feeding means (2) for supplying the vegetable products to be reduced to the reducing means in a feeding direction (21), said reducing means comprising a housing part (31) and at least two rotary members (41, 42) disposed one behind the other within the housing part, which rotary members are rotatable about an associated axis of rotation (47) that extends perpendicularly to the feeding direction, wherein said at least two rotary members each comprise a shaft member (43) whose central axis coincides with the associated axis of rotation and a number of arms (51) extending from said shaft member, which arms are provided with reducing elements (52) at their ends, wherein, in use, the ends of the reducing elements associated with an adjacent rotary member pass the ends of the reducing elements associated with an adjacent rotary member on facing sides with some distance there between, said housing part comprising an inlet (37) for presenting, via said inlet, material supplied by the feeding means to the at least two rotary members in use, and an outlet (38) for discharging vegetable material subjected to the reducing action of the at least two rotary members, and driving means (16, 44, 45) for driving the reducing means and the feeding means, wherein the feeding means are disposed some distance (X) from the reducing means, **characterized in that** the housing part is provided with a curved screen (58) on at least the downstream outer side of the path of the reducing elements associated with the rotary member that is disposed closest to the feeding means, and **in that** the distance (X) between the feeding means and the reducing means equals 2/3 of the diameter of the rotary member and/or wherein said distance ranges between 10 cm and 50 cm.

2. A device according to claim 1, wherein the curved screen extends to a point on an axis connecting line that interconnects the central axes of the at least two rotary members, and wherein preferably one end of the curved screen is located near, and preferably on, the axis connecting line.

3. A device according to claim 1 or 2, wherein the ends of the reducing elements pass the screen at a distance therefrom, which distance is at most 25 mm, preferably at most 10 mm, even more preferably at most 5 mm.

4. A device according to any one of the preceding claims, wherein the spacing between the ends of the reducing elements associated with a rotary member and the ends of the reducing elements associated with an adjacent rotary member on facing sides thereof is at most 25 mm, preferably at most 10 mm, more preferably at most 5 mm.

5. A device according to one or more of the preceding claims, wherein the housing part (31) has an upper surface (35) along the inner side of which ends of the reducing elements associated with at least one rotary member pass with a spacing of at most 25 mm, preferably at most 10 mm, more preferably at most 5 mm there between in use and/or wherein the housing part has a bottom surface (34) along the inner side of which ends of the reducing elements associated with at least one rotary member pass with a spacing of at most 25 mm, preferably at most 10 mm, more preferably at most 5 mm there between in use.

6. A device according to claim 5, wherein the outlet is located downstream of the at least two rotary members, and wherein the upper surface and/or the bottom surface are free from one or more outlets.

7. A device according to any one of the preceding claims, wherein the driving means for each rotary member comprise an individually controllable driving motor (44, 45).

8. A device according to any one of the preceding claims, wherein the feeding means comprise a screw conveyor (11) which is rotatable about a further axis of rotation, having a central axis (12) which coincides with said further axis of rotation, defining the feeding direction, and an end that faces the reducing means, which end is located within a tubular further housing part (13) that closely abuts the outer side of the screw conveyor, which housing part connects to the inlet (37).

9. A device according to claim 8, wherein the extension of the central axis of the screw conveyor intersects the central axis of at least one rotary member or wherein the extension of the central axis of the screw conveyor crosses said axis of the at least one rotary member at a distance of at most 5 cm.

10. A method for operating a device according to claim 1, wherein the device is operated such that the at least two rotary members are driven in the same direction.

11. A method for operating a device according to claim 1, wherein the device is operated such that at least two rotary members are driven at different speeds, preferably an upstream rotary member being driven at a higher speed than an adjacent downstream rotary member.

12. A method according to claim 10 or 11, wherein at least one rotary member is driven at a speed that ranges between 1000 revolutions per minute and 3000 revolutions per minute.

13. A method for operating a device according to claim 1, wherein the device is operated such that the at least two rotary members are driven at different power levels.

14. A method according to one of claims 10-13 for operating a device according to claims 8 or 9, wherein the device is operated such that the screw conveyor is driven at a speed that ranges between 0.5 revolutions per minute and 10 revolutions per minute.

## Patentansprüche

1. Vorrichtung (1) zum Kürzen von pflanzlichen Produkten, umfassend Kürzungsmittel (3) und Zuführmittel (2) zum Liefern der pflanzlichen Produkte, die gekürzt werden sollen, an das Kürzungsmittel in einer Zuführrichtung (21), wobei das Kürzungsmittel ein Gehäuseteil (31) und mindestens zwei Drehelemente (41, 42) umfasst, die eines hinter dem anderen innerhalb des Gehäuseteils angeordnet sind, wobei die Drehelemente um eine zugehörige Drehachse (47), die sich senkrecht zu der Zuführrichtung erstreckt, drehbar sind, wobei die mindestens zwei Drehelemente jeweils ein Wellenelement (43) umfassen, dessen zentrale Achse mit der zugehörigen Drehachse und einer Anzahl von Armen (51), die sich von dem Wellenelement erstrecken, zusammenfällt, wobei die Arme mit Kürzungselementen (52) an ihren Enden bereitgestellt sind, wobei die Enden der Kürzungselemente, die einem benachbarten Drehelement zugeordnet sind, im Betrieb zu den Enden der Kürzungselemente, die einem benachbarten Drehelement auf zugewandten Seiten zugeordnet sind, mit gewissem Abstand dazwischen verlaufen, wobei das Gehäuseteil einen Einlass (37) zum Übergeben über den Einlass von Material, das durch die Zuführmittel geliefert wird an die mindestens zwei im Betrieb befindlichen Drehelemente umfasst, und einen Auslass (38) zum Abgeben von pflanzlichem Material, das der Kürzungsaktion der mindestens zwei Drehelemente ausgesetzt wurde, und ein Antriebsmittel (16, 44, 45) zum Antreiben des Kürzungsmittels und des Zuführmittels, wobei das Zuführmittel in gewissem Abstand (X) von dem Kürzungsmittel angeordnet ist, **dadurch gekennzeichnet, dass** der Gehäuseteil mit einem Bogensieb (58) auf mindestens der stromabwärtigen Außenseite des Weges der Kürzungselemente angeordnet ist, die dem Drehelement zugeordnet sind, das zu dem Zuführmittel am nächsten angeordnet ist, und dass der Abstand (X) zwischen dem Zuführmittel und dem Kürzungsmittel 2/3 des Durchmessers des Drehelements entspricht und/oder wobei der Abstand in einem Bereich von 10 cm bis 50 cm liegt.

2. Vorrichtung nach Anspruch 1, wobei sich das Bogensieb zu einem Punkt auf einer Achsenverbindungslinie erstreckt, die die zentralen Achsen der mindestens zwei Drehelemente miteinander verbindet, und wobei sich vorzugsweise ein Ende des Bogensiebs nahe, und vorzugsweise auf, der Achsenverbindungslinie befindet.

3. Vorrichtung nach Anspruch 1 oder 2, wobei die Enden der Kürzungselemente zu dem Sieb in einem Abstand davon verlaufen, wobei der Abstand maximal 25 mm, vorzugsweise maximal 10 mm, insbesondere maximal 5 mm beträgt.

4. Vorrichtung nach einem der vorhergehenden Ansprüche, wobei der Zwischenraum zwischen den Enden der Kürzungselemente, die einem Drehelement zugeordnet sind, und den Enden der Kürzungselemente, die einem benachbarten Drehelement auf zugewandten Seiten davon zugeordnet sind, maximal 25 mm, vorzugsweise maximal 10 mm, insbesondere maximal 5 mm beträgt.

5. Vorrichtung nach einem der vorhergehenden Ansprüche, wobei der Gehäuseteil (31) eine obere Fläche (35) entlang der Innenseite aufweist, zu der Enden der Kürzungselemente, die mindestens einem Drehelement zugeordnet sind, im Betrieb mit einem Zwischenraum von maximal 25 mm, vorzugsweise von maximal 10 mm, insbesondere von maximal 5 mm dazwischen verlaufen und/oder wobei der Gehäuseteil eine Bodenfläche (34) entlang der Innenseite aufweist, zu der Enden der Kürzungselemente, die mindestens einem Drehelement zugeordnet sind, im Betrieb mit einem Zwischenraum von maximal 25 mm, vorzugsweise von maximal 10 mm, insbesondere von maximal 5 mm dazwischen verlaufen.

6. Vorrichtung nach Anspruch 5, wobei sich der Auslass stromabwärts von den mindestens zwei Drehelementen befindet, und wobei die obere Fläche und/oder die Bodenfläche frei von einem oder mehreren Auslässen ist/sind.

7. Vorrichtung nach einem der vorhergehenden Ansprüche, wobei die Antriebsmittel für jedes Drehelement einen individuell steuerbaren Antriebsmotor (44, 45) umfassen.

8. Vorrichtung nach einem der vorhergehenden Ansprüche, wobei das Zuführmittel eine Förderschnecke (11) umfasst, die um eine weitere Drehachse drehbar ist und die eine zentrale Achse (12) aufweist, die mit der weiteren Drehachse zusammenfällt, und die Zuführrichtung definiert, und ein Ende, das den Kürzungsmitteln zugewandt ist, wobei sich das Ende innerhalb eines rohrförmigen weiteren Gehäuseteils (13) befindet, der eng an der Außenseite der Förderschnecke anliegt, wobei der Gehäuseteil mit dem Einlass (37) verbunden ist.

9. Vorrichtung nach Anspruch 8, wobei die Verlängerung der zentralen Achse der Förderschnecke die zentrale Achse von mindestens einem Drehelement schneidet oder wobei die Verlängerung der zentralen Achse der Förderschnecke die Achse des mindestens einen Drehelements in einem Abstand von maximal 5 cm kreuzt.

10. Verfahren zum Betreiben einer Vorrichtung nach Anspruch 1, wobei die Vorrichtung derart betrieben wird, dass die mindestens zwei Drehelemente in die gleiche Richtung angetrieben werden.

11. Verfahren zum Betreiben einer Vorrichtung nach Anspruch 1, wobei die Vorrichtung derart betrieben wird, dass mindestens zwei Drehelemente mit unterschiedlichen Geschwindigkeiten angetrieben werden, wobei vorzugsweise ein stromaufwärtiges Drehelement mit einer höheren Geschwindigkeit als ein benachbartes stromabwärtiges Drehelement angetrieben wird.

12. Verfahren nach Anspruch 10 oder 11, wobei mindestens ein Drehelement mit einer Geschwindigkeit angetrieben wird, die in einem Bereich von 1000 Umdrehungen pro Minute bis 3000 Umdrehungen pro Minute liegt.

13. Verfahren zum Betreiben einer Vorrichtung nach Anspruch 1, wobei die Vorrichtung derart betrieben wird, dass die mindestens zwei Drehelemente mit unterschiedlichen Leistungsniveaus angetrieben werden.

14. Verfahren nach einem der Ansprüche 10-13 zum Betreiben einer Vorrichtung nach Anspruch 8 oder 9, wobei die Vorrichtung derart betrieben wird, dass die Förderschnecke mit einer Geschwindigkeit angetrieben wird, die in einem Bereich von 0,5 Umdrehungen pro Minute bis 10 Umdrehungen pro Minute liegt.

## Revendications

1. Dispositif (1) de fragmentation de produits végétaux, comprenant des moyens de fragmentation (3) et des moyens d'alimentation (2) pour fournir les produits végétaux à fragmenter aux moyens de fragmentation dans une direction d'alimentation (21), lesdits moyens de fragmentation comprenant une partie de logement (31) et au moins deux éléments rotatifs (41, 42) disposés l'un derrière l'autre dans la partie de logement, lesquels éléments rotatifs peuvent tourner autour d'un axe de rotation (47) associé qui s'étend perpendiculairement à la direction d'alimentation, où lesdits au moins deux éléments rotatifs comprennent chacun un élément d'arbre (43) dont l'axe central coïncide avec l'axe de rotation associé et un certain nombre de bras (51) s'étendant à partir dudit élément d'arbre, lesquels bras sont munis d'éléments de fragmentation (52) au niveau de leurs extrémités, où, en cours d'utilisation, les extrémités des éléments de fragmentation associés à un élément rotatif adjacent dépassent les extrémités des éléments de fragmentation associés à un élément rotatif adjacent sur des côtés opposés d'une certaine distance entre celles-ci, ladite partie de logement comprenant une entrée (37) pour présenter, par ladite entrée, un matériau fourni par les moyens d'alimentation aux au moins deux éléments rotatifs en cours d'utilisation, et une sortie (38) pour décharger une matière végétale soumise à l'action de fragmentation des au moins deux éléments rotatifs, et des moyens d'entraînement (16, 44, 45) pour entraîner les moyens de fragmentation et les moyens d'alimentation, où les moyens d'alimentation sont disposés à une certaine distance (X) des moyens de fragmentation, **caractérisé en ce que** la partie de logement est munie d'un crible incurvé (58) sur au moins le côté externe aval du trajet des éléments de fragmentation associés à l'élément rotatif qui est disposé le plus près des moyens d'alimentation, et **en ce que** la distance (X) entre les moyens d'alimentation et les moyens de fragmentation est égale à 2/3 du diamètre de l'élément rotatif et/ou où ladite distance se trouve dans la plage comprise entre 10 cm et 50 cm.

2. Dispositif selon la revendication 1, dans lequel le crible incurvé s'étend jusqu'à un point sur une ligne de liaison d'axes qui relie les axes centraux des au moins deux éléments rotatifs entre eux, et dans lequel de préférence une extrémité du crible incurvé est située à proximité de la ligne de liaison d'axes, et de préférence sur celle-ci.

3. Dispositif selon la revendication 1 ou 2, dans lequel les extrémités des éléments de fragmentation dépassent le crible à une distance de celui-ci, laquelle distance est d'au plus 25 mm, de préférence d'au plus 10 mm, encore plus préférablement d'au plus 5 mm.

4. Dispositif selon l'une quelconque des revendications précédentes, dans lequel l'espacement entre les extrémités des éléments de fragmentation associés à un élément rotatif et les extrémités des éléments de fragmentation associés à un élément rotatif adjacent sur des côtés opposés de celui-ci est d'au plus 25 mm, de préférence d'au plus 10 mm, plus préférablement d'au plus 5 mm.

5. Dispositif selon une ou plusieurs des revendications précédentes, dans lequel la partie de logement (31) a une surface supérieure (35) le long du côté interne que les extrémités des éléments de fragmentation associés à au moins un élément rotatif dépassent avec un espacement d'au plus 25 mm, de préférence d'au plus 10 mm, plus préférablement d'au plus 5 mm entre ceux-ci en cours d'utilisation et/ou dans lequel la partie de logement a une surface inférieure (34) le long du côté interne que les extrémités des éléments de fragmentation associés à au moins un élément rotatif dépassent avec un espacement d'au plus 25 mm, de préférence d'au plus 10 mm, plus préférablement d'au plus 5 mm entre ceux-ci en cours d'utilisation.

6. Dispositif selon la revendication 5, dans lequel la sortie est située en aval des au moins deux éléments rotatifs, et dans lequel la surface supérieure et/ou la surface inférieure est/sont dépourvue(s) d'une ou de plusieurs sortie(s).

7. Dispositif selon l'une quelconque des revendications précédentes, dans lequel les moyens d'entraînement pour chaque élément rotatif comprennent un moteur d'entraînement (44, 45) pouvant être commandé individuellement.

8. Dispositif selon l'une quelconque des revendications précédentes, dans lequel les moyens d'alimentation comprennent un convoyeur à vis (11) qui peut tourner autour d'un axe de rotation supplémentaire, ayant un axe central (12) qui coïncide avec ledit axe de rotation supplémentaire, définissant la direction d'alimentation, et une extrémité qui fait face aux moyens de fragmentation, laquelle extrémité est située dans une partie de logement tubulaire supplémentaire (13) qui vient étroitement en butée contre le côté externe du convoyeur à vis, laquelle partie de logement est reliée à l'entrée (37).

9. Dispositif selon la revendication 8, dans lequel l'extension de l'axe central du convoyeur à vis coupe l'axe central d'au moins un élément rotatif ou dans lequel l'extension de l'axe central du convoyeur à vis traverse ledit axe de l'au moins un élément rotatif à une distance d'au plus 5 cm.

10. Procédé de fonctionnement d'un dispositif selon la revendication 1, dans lequel le dispositif fonctionne de sorte que les au moins deux éléments rotatifs soient entraînés dans la même direction.

11. Procédé de fonctionnement d'un dispositif selon la revendication 1, dans lequel le dispositif fonctionne de sorte qu'au moins deux éléments rotatifs soient entraînés à des vitesses différentes, de préférence un élément rotatif amont étant entraîné à une vitesse supérieure à celle d'un élément rotatif aval adjacent.

12. Procédé selon la revendication 10 ou 11, dans lequel au moins un élément rotatif est entraîné à une vitesse qui se trouve dans une plage comprise entre 1000 tours par minute et 3000 tours par minute.

13. Procédé de fonctionnement d'un dispositif selon la revendication 1, dans lequel le dispositif fonctionne de sorte que les au moins deux éléments rotatifs soient entraînés à différents niveaux d'énergie.

14. Procédé selon l'une des revendications 10 à 13 pour faire fonctionner un dispositif selon la revendication 8 ou 9, dans lequel le dispositif fonctionne de sorte que le convoyeur à vis soit entraîné à une vitesse qui se trouve dans une plage comprise entre 0,5 tour par minute et 10 tours par minute.
